(19) Europäisches Patentamt
European Patent Office
Office européen des brevets

(11) Numéro de publication: **0 014 625**
**B1**

(12)

# FASCICULE DE BREVET EUROPEEN

(45) Date de publication du fascicule du brevet: **22.12.82**

(51) Int. Cl.³: **C 08 G 63/68**

(21) Numéro de dépôt: **80400116.2**

(22) Date de dépôt: **24.01.80**

(54) **Co(polycarbonates) contenant des fonctions hémiesters alcalins d'acides phosphoniques.**

(30) Priorité: **05.02.79 FR 7902836**

(43) Date de publication de la demande:
**20.08.80 Bulletin 80/17**

(45) Mention de la délivrance du brevet:
**22.12.82 Bulletin 82/51**

(84) Etats contractants désignés:
**DE IT NL**

(56) Documents cités:
DE - A - 1 495 378
DE - A - 2 114 236
US - A - 3 847 866

Angewandte Chemie, 1965, 77, pp. 618—619

(73) Titulaire: **ATO CHIMIE**
**Tour Aquitaine Cédex no 4**
**F-92080 Paris La Defense (FR)**

(72) Inventeur: **Poisson, Pierre**
**28 "Les Logis" Avenue du Président Kennedy**
**F-27300 Bernay (FR)**
Inventeur: **Sturtz, Georges**
**22, Rue Léon Blum**
**F-29200 Brest (FR)**

(74) Mandataire: **Lanos, Françoise**
**SOCIETE NATIONALE ELF AQUITAINE**
**DEPARTEMENT PROPRIETE INDUSTRIELLE Tour Aquitaine**
**F-92080 Paris la Defense Cedex No. 4 (FR)**

**EP 0 014 625 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Co(polycarbonates) contenant des fonctions hémiesters alcalins d'acides phosphoniques

La présente invention concerne des (co)polycarbonates comportant dans la chaîne macromoléculaire des motifs dérivés d'un hémiester alcalin d'acide bis(hydroxy-4-phényl)alcoylphosphonique et présentant de bonnes qualités de résistance au feu.

Les polycarbonates sont par eux-mêmes des matériaux autoextinguibles. Mais pour un certain nombre d'applications concernant le bâtiment, l'électro-ménager, l'industrie aéronautique, il est nécessaire d'obtenir une résistance au feu améliorée par rapport à celle du polycarbonate lui-même.

Comme agents ignifugeants des polycarbonates on a déjà fait usage de produits halogénés tels que le décabromodiphényl éther comme additif ou le tétrachloro ou le tétrabromobiphénol A comme agent de polycondensation. Mais la présence de ces produits présente l'inconvénient de conduire à des matériaux susceptibles de dégager au moment de la combustion des acides halohydriques (HCl ou HBr) qui sont toxiques et corrosifs.

Les dérivés du phosphore sont connus pour améliorer la résistance au feu d'un grand nombre de polymères. Ils ne sont ni toxiques ni corrosifs au cours de la combustion et on a pensé à utiliser les dérivés du phosphore en tant qu'agents ignifugeants des polycarbonates. Les dérivés du phosphore possèdent des propriétés d'inhibiteur de combustion. Leur action consisterait dans la formation de résidus charbonneux et de matières incombustibles qui ralentissent la diffusion des gaz combustibles vers la zone de combustion.

Des travaux antérieurs font état de l'introduction de l'atome de phosphore dans la chaîne macromoléculaire. FR. 1.402.407; DT 1.199.499; US 3.378.523; JA 75.72936 parmi lesquels sont décrits les copolycondensats de formule:

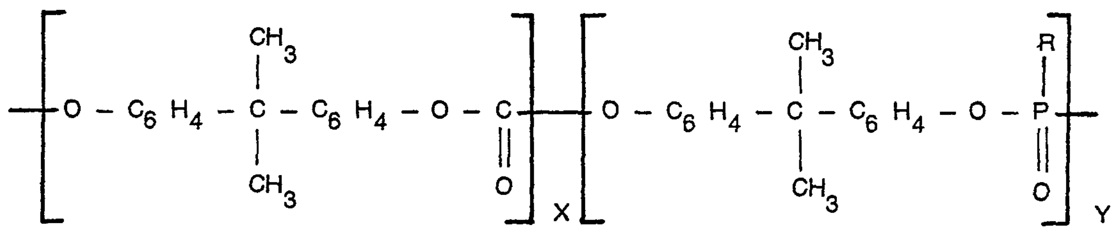

ils ont une faible stabilité à l'hydrolyse de la fonction phosphonique dont l'attaque conduit à une dégradation chimique de la chaîne macromoléculaire.

Des polymères plus stables de formule:

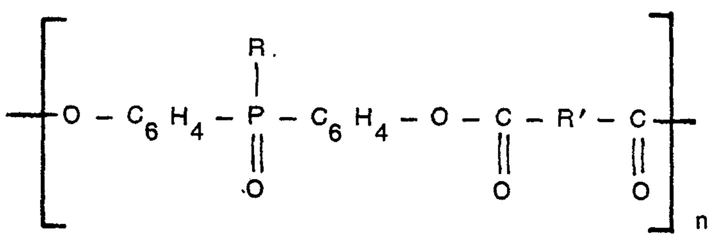

ont été synthétisés (J. of Polymer Science 1974 P. 2357) à partir d'oxydes de phosphine. Mais la synthèse des oxydes de phosphine est difficile à réaliser dans la pratique. Iliopoulos et Wieder (Angewandte Chem. 1965, 77, 618) ont obtenu un polycarbonate comportant des groupements phosphonates "pendants" par réaction interfaciale de bis(hydroxy-4-phényl)-1,1 éthylphosphonate de diméthyle avec du phosgène.

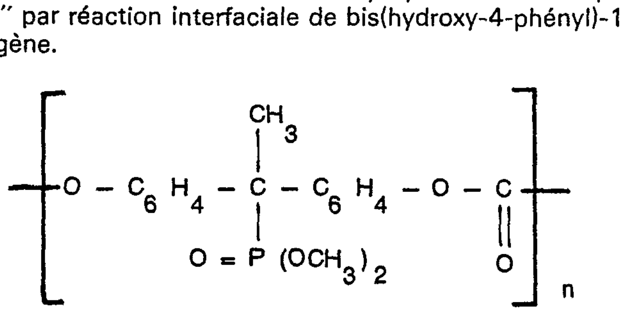

Les groupements phosphonates étant à l'extérieur de la chaîne macromoléculaire ces polymères sont peu sensibles aux phénomènes de dégradation par hydrolyse.

Mais ils présentent l'inconvénient d'être trop rigides pour certaines applications et d'avoir des points de transition vitreuse élevés ce qui rend leur façonnage laborieux.

D'autre part l'emploi de proportions notables d'un dérivé phosphoré dans le polymère peut augmenter le coût du copolymère obtenu dans des proportions trop importantes.

La présente invention remédie à ces inconvénients.

Elle concerne des (co)polycarbonates comportant dans la chaîne macromoléculaire des motifs dérivés d'un hémiester alcalin d'acide bis(hydroxy-4 phényl) alcoyle phosphonique de formule générale:

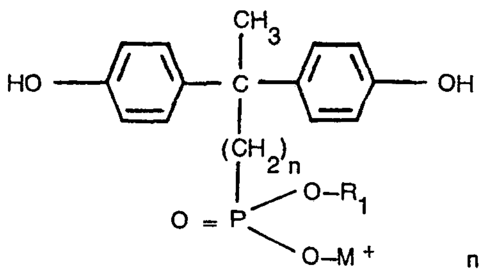

(II)

n = 0,1, 2 ou 3

dans laquelle $R_1$ est un radical méthyle ou éthyle M est un métal alcalin sodium ou potassium.

Les hémiesters de formule II sont obtenus par hydrolyse alcaline des diesters correspondants, eux-mêmes préparés par action du phénol sur un $\beta$, $\gamma$ ou $\delta$ cétophosphonate de dialcoyle en présence de BF3, comme décrit en détail dans la demande de brevet français N°78 35.753 du 20 Décembre 1978.

Ces hémiesters permettent d'obtenir soit des homopolycarbonates

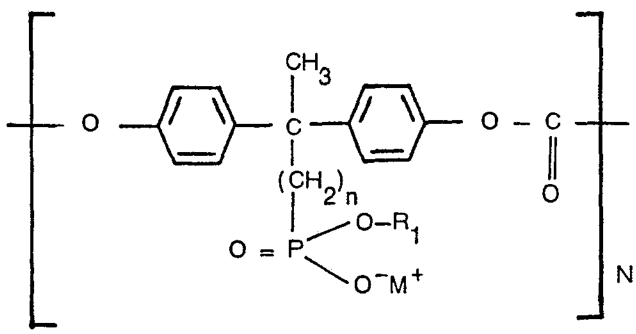

qui peuvent être utilisés comme agents ignifugeants en addition à d'autres polymères, soit des copolycarbonates par co-condensation avec le bis phénol A avec lequel on obtient des produits de formule

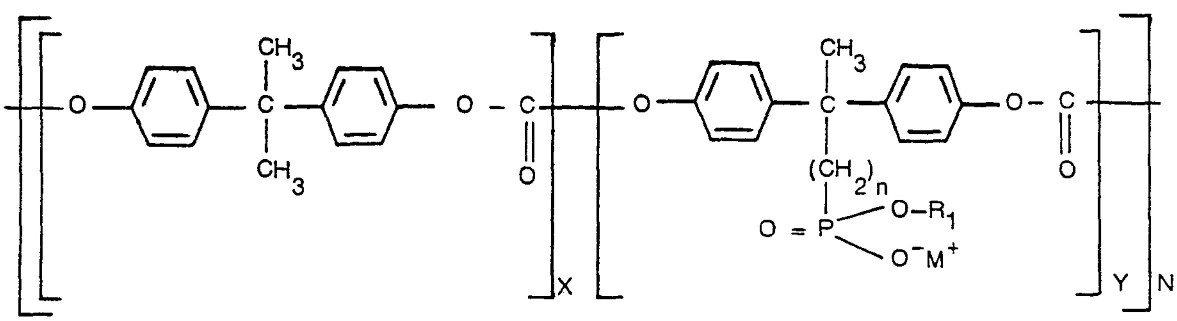

ou X et Y représentent les proportions molaires dans le motif de récurrence, et N indique la répétition.

Les polycarbonates et copolycarbonates obtenus selon l'invention sont transparents et possèdent en outre une bonne stabilité thermique à 250°C ce qui permet de les mettre en oeuvre sans craindre de dégradation moléculaire.

Comme hémiesters phosphoniques alcalins on peut utiliser par exemple: le bis(hydroxy-4 phényl)-1,1 éthylphosphonate de méthyle et de sodium, le bis(hydroxy-4 phényl)-1,1 éthylphosphonate de méthyle et de potassium, le bis(hydroxy-4 phényl)-2,2 propylphosphonate de méthyle et de sodium, le bis(hydroxy-4 phényl)-2,2 propylphosphonate de méthyle et de potassium, le bis(hydroxy-4 phényl)-3,3 butylphosphonate de méthyle et de sodium, le bis(hydroxy-4 phényl)-2,2 propylphosphonate d'éthyle et de potassium.

Les polycarbonates et copolycarbonates de cette invention ont été réalisés par le procédé de phosgénation interfaciale. Cette technique, connue en soi, consiste à dissoudre les bis-phénols dans une solution aqueuse d'un hydroxyde alcalin, de préférence la soude ou la potasse caustique, employé en excès de 10 à 50% molaire par rapport au bisphénol et on ajoute un solvant non miscible

convenable pour dissoudre le polycarbonate formé.

Les solvants généralement utilisés sont des hydrocarbures chlorés tels que le chlorure de méthylène, le chloroforme et le 1,2 dichloréthane.

On fait réagir sur les bisphénolates de sodium (ou de potassium) le phosgène qui peut être introduit en solution dans le toluène à 20% mais également sous forme gazeuse.

La réaction s'effectue entre 5 et 25°C, du préférence entre 5 et 15°C. Elle peut être catalysée par des amines tertiaires tels que la triéthylamine mais également par des sels d'ammonium quaternaire ou des sels de phosphonium.

Le chlorure de triéthylbenzyl ammonium et le chlorure de triphénylbenzyl phosphonium conduisent à des masses plus élevées. Les quantités de catalyseur peuvent être comprises entre 1 et 5% de préférence 1 et 3% molaire par rapport aux bisphénols.

La phosgénation peut également être conduite en présence d'interrupteur de chaînes comme par exemple les alcools (méthanol, éthanol) et les phénols (tels que le phénol, le diméthyl 2,6 phénol).

On utilise le phénol à raison de 1% à 2% molaire par rapport aux bisphénols.

L'addition de phosgène terminée, on poursuit la polycondensation pendant une durée qui peut aller de 30 min à 3 h, de préférence 1 à 2 h à une température voisine de 30°C.

Les polycarbonates peuvent être isolés par des méthodes connues. Ainsi, par exemple, on sépare la phase aqueuse, on lave la phase organique à plusieurs reprises avec de l'eau jusqu'à neutralité des eaux de lavage. On verse ensuite la phase organique dans un non solvant du polycarbonate tel que l'éther. Le polycarbonate précipité est essoré puis séché sous pression réduite à 100—120°C pendant 24 à 48 heures.

Il existe, pour évaluer la combustion des polymères, un nombre important de tests, mais il est de plus en plus admis que l'essai de détermination de l'indice d'oxygène est un moyen pour caractériser les qualités des matériaux dans leur comportement au feu. Cette méthode permet d'évaluer la combustion des polymères dans une atmosphère à concentration définie et variable en oxygène. L'indice limite d'oxygène (L.O.I.) est donné par la formule

$$L.O.I. = \frac{(O_2)}{(O_2)+(N_2)} \times 100$$

$(O_2)$ et $(N_2)$ sont les concentrations en oxygène et en azote dans le mélange de combustion utilisé pour brûler le matériau soumis à l'essai. De plus amples détails sont donnés dans la norme ASTM D—2863,70.

*Les masses moléculaires* ont été déterminées par chromatographie sur gel perméable (GPC) selon cette méthode:

on injecte la solution obtenue dans un appareil chromatographique WATERS, type "GPC 200" travaillant dans les conditions suivantes:

— jeu de 6 colonnes de styragel de porosité allant de $10^6$ à 700 Å

— solvant: THF à température ambiante, débit 1,25 ml/mn.

— quantité injectée: 2 ml à 0,25% (poids/volume). Les résultats ont été obtenus par étalonnage universel au moyen de fractions étroites de polystyrène WATERS.

*Les températures de transition vitreuse* Tg ont été déterminées sur un appareil HERAEUS, type TA 500 S selon les conditions suivantes:

— cellule: DSC (differential scanning calorimetry)

— référence: capsule vide

— vitesse de chauffage: 10°C $min^{-1}$

— conditions de mesure: le produit est chauffé une première fois puis refroidi rapidement, la température de transition vitreuse est déterminée au second chauffage.

*La stabilité thermique des polycarbonates* a été déterminée sur une thermobalance METTLER, type HE 20 équipée d'un programmateur linéaire de température.

Poids de la prise d'échantillon 100 mg

Atmosphère: air

Montée en température: 6°C $min^{-1}$ puis isotherme 250°C.

Les exemples suivants sont donnés à titre illustratif et non limitatif:

Exemples 1 à 3

*Copolycarbonates de bisphénol A et de bisphénol phosphonates de méthyle et de sodium de structure:*

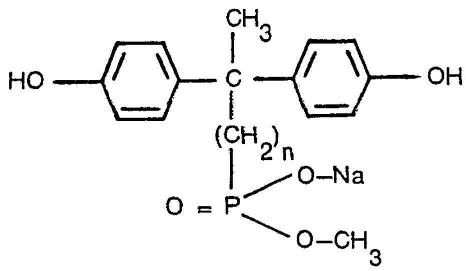

n = 0 composé phosphoré A
n = 1 composé phosphoré C
n = 2 composé phosphoré E

Les compositions contiennent 1% molaire de composé phosphoré (A, C et E) et 99% molaire de bisphénol A.

Les essais ont été réalisés sur 0,1 mole de composés dihydroxylés. Les conditions opératoires sont schématisées ci-après:

Dans un ballon de 1 litre à 5 tubulures équipé d'un agitateur, d'un réfrigérant ascendant, d'un thermomètre, d'une ampoule d'introduction et d'une électrode pour mesurer le pH, on dissout 0,1 mole du mélange de composé phosphoré et de bisphénol A dans 150 ml d'une solution de soude 1,56 N préparée par dissolution de 9,4 g de soude en pastilles (0,235 mole) dans 150 ml d'eau permutée.

A la solution obtenue, on introduit successivement: 0,35 g de chlorure de triéthylbenzyl ammonium (1,5% molaire par rapport aux bisphénols), 0,1 g de phénol (1% molaire par rapport aux bisphénols), puis 170 ml de chlorure de méthylène préalablement passé sur tamis moléculaire 0,4 nm pour éliminer les alcools (méthanol et éthanol) de stabilisation.

Le milieu réactionnel est refroidi sous courant d'azote vers 5°C puis on introduit sous forte agitation en une heure 58 ml (0,11 mole) d'une solution toluénique à 20% en phosgène.

La température est maintenue entre 5 et 15°C, le pH est supérieur à 9 pendant la durée d'introduction de la solution de phosgène.

L'addition terminée, on maintient l'émulsion par forte agitation sous courant d'azote 1 heure à 30°C (± 2°C). Après refroidissement on dilue avec 300 ml de $CH_2Cl_2$ et on décante. La phase organique est lavée plusieurs fois par 150 ml d'eau, jusqu'à neutralité des eaux de lavage puis versée lentement dans 1,7 l d'éther sous agitation.

Le polycarbonate précité est séché partiellement, broyé, puis séché à 100/110°C sous pression réduite pendant au moins 24 heures.

Les résultats sont rassemblés dans le tableau I.

Exemple 4

*Copolycarbonate de bisphénol A (99% molaire) et de bis(hydroxy-4 phényl)-1,1 éthylphosphonate de méthyle et de sodium (1% molaire):*

Dans un ballon de 2 litres comme il est décrit dans l'exemple 1, on dissout 33,58 g de bisphénol A (0,1472 mole) et 0,50 g de bis(hydroxy-4 phényl)-1,1 éthylphosphonate de méthyle et de sodium ($1,52.10^{-3}$ mole) dans 600 ml d'une solution de soude 0,75 N.

A solution obtenue on introduit successivement:

— 3 g de chlorure de triphénylbenzylphosphonium à 98% soit $7,7.10^{-3}$ mole.

— 0,21 g de phénol ($2.25.10^{-3}$ mole soit 1,6% molaire par rapport à l'ensemble des bisphénol), puis 300 ml de chlorure de méthylène.

Le milieu réactionnel est refroidi sous courant d'azote vers 5°C puis on introduit sous forte agitation, en 1 heure 90 ml d'une solution toluénique à 20% en poids en phosgène (0,17 mole). Ensuite on procède comme dans l'exemple 6.

Après une période de polycondensation de 1 h à 30°C, on dilue avec 400 ml de $CH_2Cl_2$, on décante et on lave la phase organique jusqu'à neutralité des eaux de lavages.

On verse la phase organique dans 2 l d'éther. Le polycarbonate précipité est essoré puis séché à 100°C sous pression réduite pendant 24 heures.

*Rendement 76%*
*Masses moléculaires* (G P C)
$\overline{Mw} = 27\,000$
$\overline{Mn} = 11\,400$
I = 2,4

| Analyse élémentaire | | % Calculé | % Trouvé |
|---|---|---|---|
| | P | 0,12 | 0,0307 |
| | Na | 0,089 | 0,14 |

L.O.I. = 32

Exemples 5 et 6

*Copolycarbonates de bisphénol A et de bis(hydroxy-4 phényl) alcoylphosphonate de méthyle et de potassium de structure:*

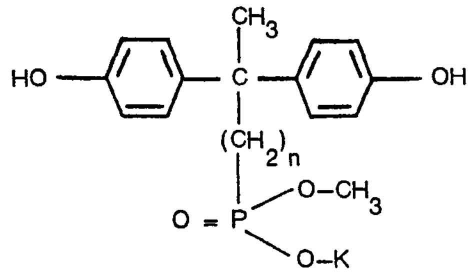

n = 0, composé B
n = 1, composé D

Les compositions de copolycarbonates contiennent 99% molaire de bisphénol A et 1% molaire de bisphénol phosphonate de méthyle et de potassium. Les essais ont été réalisés sur 0,1 mole de composés dihydroxylés. Les conditions opératoires sont celles décrites dans l'exemple 1 sauf que l'on utilise 150 ml d'une solution 1,6 N de KOH au lieu d'une solution sodique.

Le tableau II rassemble les résultats obtenus.

Exemples 7 à 10

*Copolycarbonates de bisphénol A et de bisphénol phosphonates de méthyle et de potassium de structure:*

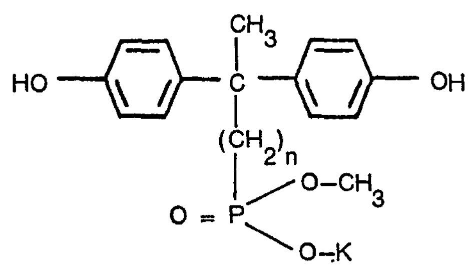

n = 0, composé B
n = 1, composé D

Les compositions de copolycarbonates contiennent de 0,5 à 2% molaire de bisphénol phosphonates. Les essais ont été réalisés sur 0,1 mole de composés dihydroxylés selon les conditions décrites dans l'exemple 1. Les résultats sont rassemblés dans le tableau III.

Exemple 11

*Copolycarbonate de bisphénol A (99% molaire) et de bis(hydroxy-4 phényl)-2,2 propylphosphonate d'éthyle et de potassium (1% molaire):*

Les conditions sont celles décrites dans l'exemple 1.

*Rendement* = 83,5%

| Analyse élémentaire | | % Calculé | % Trouvé |
|---|---|---|---|
| | P | 0,120 | |
| | K | 0,151 | 0,13 |
| | Na | 0 | 0,08 |

L.O.I. = 35

TABLEAU I

| EX. | % molaire Bisphénol A — Bisphénol Phosphonate | G P C | | | Analyse élémentaire | | | | Rtd % | L.O.I. | Stabilité Thermique 2 h à 250°C |
|---|---|---|---|---|---|---|---|---|---|---|---|
| | | | | | Phosphore | | Sodium | | | | |
| | | $\overline{Mw}$ | $\overline{Mn}$ | I | Calc. % | Tr. % | Calc. % | Tr. % | | | |
| 1 Composé A | (n = 0) 99% | 43200 | 14600 | 2,9 | 0,12 | 0,016 | 0,089 | 0,13 | 84 | 31,- 31,5 | ≠ 0,05 |
| 2 Composé C | (n = 1) 99% | 50800 | 14200 | 3,5 | 0,12 | 0,067 | 0,09 | 0,10 | 83,8 | 31,- 31,5 | ≠ 0,1 |
| 3 Composé E | (n = 2) 99% | 38100 | 10300 | 3,7 | 0,12 | 0,076 | 0,09 | 0,13 | 81,6 | 31 | ≠ 0,15 |

TABLEAU II

| EX. | % molaire Bisphénol A — Bisphénol Phosphonate | G P C | | | Analyse élémentaire | | | | Rdt. % | ΔP% 2 h à 250°C | L.O.I. |
|---|---|---|---|---|---|---|---|---|---|---|---|
| | | | | | Phosphore | | Potassium | | | | |
| | | $\overline{Mw}$ | $\overline{Mn}$ | I | Calc. % | Tr. % | Calc. % | Tr. % | | | |
| 5 Composé B | (n = 0) 99% | 50300 | 14300 | 3,5 | 0,122 | 0,002 | 0,153 | 0,01 | 85 | ≠ 0 | 32,5 |
| 6 Composé D | (n = 1) 99% | 33700 | 12300 | 2,7 | 0,12 | 0,004 | 0,15 | 0,02 | 84,9 | 1,35 | 32 |

TABLEAU III

| EX. | % molaire Bisphénol A / Bisphénol Phosphonate | GPC | | | Analyse élémentaire | | | | | | | |
|---|---|---|---|---|---|---|---|---|---|---|---|---|
| | | | | | Phosphore | | Potassium | | | | | |
| | | $\overline{Mw}$ | $\overline{Mn}$ | I | Calc. % | Tr. % | Calc. % | Tr. % | Na % | Rtd. % | ΔP% 2 h à 250°C | L.O.I. |
| 7 Composé B | (n = 0) 99% | | | | 0,12 | | 0,15 | 0,11 | 0,10 | 81,5 | 0,25 | 34—35 |
| 8 Composé D | (n = 1) 99,5% / 0,5% | 59100 | 18800 | 3,1 | 0,063 | 0,072 | 0,076 | 0,07 | 0,11 | 86 | | 34—35 |
| 9 Composé D | (n = 1) 99% | 35000 | 12700 | 2,7 | 0,12 | 0,0035 | 0,15 | 0,12 | 0,065 | 86,8 | 0,85 | 33—34 |
| 10 Composé D | (n = 1) 98% / 2% | 27000 | 10700 | 2,5 | 0,24 | 0,0037 | 0,301 | 0,055 | 0,105 | 85,8 | 0,45 | 34 |

## Revendications

1. (Co)polycarbonates comportant dans la chaîne macromoléculaire des motifs dérivés d'un hémiester alcalin d'acide bis(hydroxy-4 phényl) alcoylphosphonique, caractérisés en ce qu'ils sont obtenus par réaction interfaciale, entre 5 et 30°C, du phosgène avec une solution alcaline de l'hémiester ou d'un mélange de l'hémiester et de bisphénol A dans la proportion de 0,5 à 2% en mole d'hémiester par rapport au total des constituants phénoliques, ledit hémiester répondant à la formule générale:

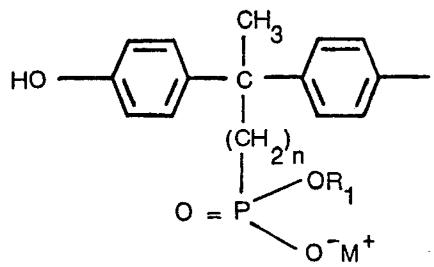

dans laquelle $R_1$ désigne un radical méthyle ou éthyle, n est égal à 0, 1, 2 ou 3, et M représente le sodium ou le potassium.

2. (Co)polycarbonates selon la revendication 1, caractérisés en ce que l'hémiester alcalin est le bis(hydroxy-4 phényl)-1,1 éthyl phosphonate de méthyle et de sodium.

3. (Co)polycarbonates selon la revendication 1, caractérisés en ce que l'hémiester alcalin est le bis(hydroxy-4 phényl)-2,2 propyl phosphonate de méthyle et de sodium.

4. (Co)polycarbonates selon la revendication 1, caractérisés en ce que l'hémiester alcalin est le bis(hydroxy-4 phényl)-3,3 butyl phosphonate de méthyle et de sodium.

5. (Co)polycarbonates selon la revendication 1, caractérisés en ce que l'hémiester alcalin est le bis(hydroxy-4 phényl)-1,1 éthyl phosphonate de méthyle et de potassium.

6. (Co)polycarbonates selon la revendication 1, caractérisés en ce que l'hémiester alcalin est le bis(hydroxy-4 phényl)-2,2 propyl phosphonate de méthyle et de potassium.

7. (Co)polycarbonates selon la revendication 1, caractérisés en ce que l'hémiester alcalin est le bis(hydroxy-4 phényl)-2,2 propyl phosphonate d'éthyle et de potassium.

## Patentansprüche

1. (Co)Polycarbonate, die in der makromolekularen Kette wiederkehrende Einheiten von einem alkalischen Hemiester von Bis-(4-hydroxyphenyl)-alkylphosphonsäure aufweisen, dadurch gekennzeichnet, dass man sie durch zwischen 5 und 30°C durchgeführte Grenzflächenreaktion von Phosgen mit einer alkalischen Lösung des Hemiesters oder eines aus dem Hemiester und Bisphenol A bestehenden Gemisches in einer Menge an Hemiester von 0,5 bis 2 Molprozent bezogen auf die Gesamptmenge an Phenolverbindungen erhält, und dass das Hemiester die folgende allgemeine Formel aufweist:

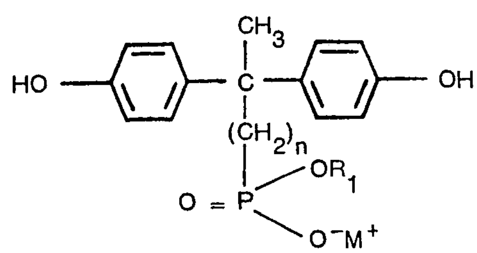

worin $R_1$ ein Methyl- oder Äthylrest ist, n die Bedeutung 0,1,2 oder 3 hat, und M für Natrium oder Kalium steht.

2. (Co)Polycarbonate nach Anspruch 1, dadurch gekennzeichnet, dass das alkalische Hemiester das Methyl- und Natrium Bis-(4-hydroxyphenyl)-1,1-äthylphosphonat darstellt.

3. (Co)Polycarbonate nach Anspruch 1, dadurch gekennzeichnet, dass das alkalische Hemiester das Methyl- und Natrium Bis-(4-hydroxyphenyl)-2,2 propylphosphonat darstellt.

4. (Co)Polycarbonate nach Anspruch 1, dadurch gekennzeichnet, dass das alkalische Hemiester das Methyl- und Natrium Bis-(4-hydroxyphenyl)-3,3 butylphosphonat darstellt.

5. (Co)Polycarbonate nach Anspruch 1, dadurch gekennzeichnet, dass das alkalische Hemiester das Methyl- und Kalium Bis-(4-hydroxyphenyl)-1,1 äthylphosphonat darstellt.

6. (Co)Polycarbonate nach Anspruch 1, dadurch gekennzeichnet, dass das alkalische Hemiester

das Methyl- und Kalium Bis-(4-hydroxyphenyl)-2,2 propylphosphonat darstellt.

7. (Co)Polycarbonate nach Anspruch 1, dadurch gekennzeichnet, dass das alkalische Hemiester das Äthyl und Kalium Bis-(4-hydroxyphenyl)-2,2 propylphosphonat darstellt.

## Claims

1. (Co)polycarbonates, the macromolecular chain of which contains groups derived from an alcaline hemiester of bis-(4-hydroxyphenyl)-alkylphosphonic acid, characterised in that they are obtained by interfacial reaction of phosgene with an alcaline solution of the hemiester or of a mixture of the hemiester and bisphenol A in a molar proportion of hemiester ranging from 0.5 to 2% total phenolic compounds, said interfacial reaction being carried out between 5 and 30°C, and in that the hemiester has the general formula:

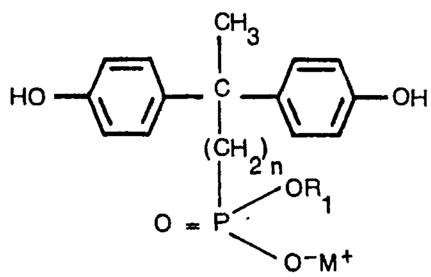

where $R_1$ is a methyl of ethyl radical, n=0,1,2 or 3, and M is sodium or potassium.

2. (Co)polycarbonates according to claim 1, in which the alcaline hemiester is methyl and sodium bis-(4-hydroxyphenyl)-1,1-ethylphosphonate.

3. (Co)polycarbonates according to claim 1, in which the alcaline hemiester is methyl and sodium bis-(4-hydroxyphenyl)-2,2-propylphosphonate.

4. (Co)polycarbonates according to claim 1, in which the alcaline hemiester is methyl and sodium bis-(4-hydroxyphenyl)-3,3-butylphosphonate.

5. (Co)polycarbonates according to claim 1, in which the alcaline hermiester is methyl and potassium bis-(4-hydroxyphenyl)-1,1-ethylphosphonate.

6. (Co)polycarbonates according to claim 1, in which the alcaline hemiester is methyl and potassium bis-(4-hydroxyphenyl)-2,2-propylphosphonate.

7. (Co)polycarbonates according to claim 1, in which the alcaline hemiester is ethyl and potassium bis-(4-hydroxyphenyl)-2,2-propylphosphonate.